**Europäisches Patentamt**

**European Patent Office**

**Office européen des brevets**

(11) Veröffentlichungsnummer: **0 209 673**
**A1**

(12) **EUROPÄISCHE PATENTANMELDUNG**

(21) Anmeldenummer: **86107081.1**

(22) Anmeldetag: **24.05.86**

(51) Int. Cl.⁴: **B 65 D 81/32**
**B 65 D 83/00, B 05 C 21/00**
**B 05 C 7/02**
**//F16B13/14**

(30) Priorität: **06.07.85 DE 3524289**

(43) Veröffentlichungstag der Anmeldung:
**28.01.87 Patentblatt 87/5**

(84) Benannte Vertragsstaaten:
**AT BE CH FR GB IT LI NL**

(71) Anmelder: **fischer-werke Artur Fischer GmbH & Co. KG**
**Weinhalde 14-18**
**D-7244 Tumlingen/Waldachtal 3(DE)**

(72) Erfinder: **Fischer, Artur, Prof. Dr. h. c.**
**Weinhalde 34**
**D-7244 Tumlingen/Waldachtal 3(DE)**

(54) Vorrichtung zum Ausspritzen eines Bindemittels für die Verankerung eines Befestigungselementes in einem Bohrloch.

(57) Die Anmeldung betrifft eine Vorrichtung zum Ausspritzen eines Bindemittels für die Verankerung eines Befestigungselementes in einem Bohrloch. Die Vorrichtung besteht aus dem eine Komponente (3) des Bindemittels enthaltenden und verschließbaren Behältergehäuse (1) einer Spritzdüse (9) und einem im Behältergehäuse (1) verschiebbaren Kolben (6), wobei die Spritzdüse (9) am Kolben (6) angeordnet ist und die Gesamtlänge von Kolben (6) und Spritzdüse (9) mindestens der Innenraumhöhe des Behältergehäuses (1) entspricht. Um die Spritzdüse (9) ist eine vom Boden (7) des Kolbens (6) ausgehende, mit einer weiteren Komponente (12) gefüllte Hülse (11) angeordnet, deren offene Stirnseite (14) mit einem eine aufbrechbare Öffnung aufweisenden Deckel (15) verschlossen ist. Damit sind alle Bestandteile zur Durchführung der Verankerung in der Vorrichtung integriert.

Fig. 1

EP 0 209 673 A1

EP 1507

## Vorrichtung zum Ausspritzen eines Bindemittels für die Verankerung eines Befestigungselementes in einem Bohrloch

Die Erfindung betrifft eine Vorrichtung zum Ausspritzen eines Bindemittels für die Verankerung eines Befestigungselementes in einem Bohrloch, bestehend aus dem eine Komponente des Bindemittels enthaltenden und verschließbaren Behältergehäuse, einer Spritzdüse und einem im Behältergehäuse verschiebbaren Kolben, wobei die Spritzdüse am Kolben angeordnet ist und die Gesamtlänge von Kolben und Spritzdüse mindestens der Innenraumhöhe des Behältergehäuses entspricht.

Die Haltekraft herkömmlicher Befestigungselemente beruht auf der Verkeilung eines spreizbaren Teiles des Befestigungselementes im Bohrloch beispielsweise durch Eindrehen einer Befestigungsschraube. Durch das Aufspreizen entstehen allerdings Spannungen, die insbesondere in porösen und weichen Mauerwerksstoffen nur geringe Haltekräfte ermöglichen. Für solche Werkstoffe haben sich insbesondere Befestigungselemente bewährt, die durch Umspritzen mit einem Bindemittel spannungsfrei verankerbar sind. Bei einem bekannten Verankerungsverfahren dieser Art wird das Bindemittel, beispielsweise eine Zementmischung nach der Anmischung in eine Spritzvorrichtung aufgezogen und mit dieser dann ins Bohrloch eingespritzt. Für Einzelmontagen lohnt sich jedoch in der Regel nicht die Anschaffung einer solchen Spritzvorrichtung. Außerdem ist für die Anmischung des Bindemittels ein weiteres Gefäß erforderlich. Sowohl die Spritzvorrichtung als auch dieses weitere Gefäß sind sofort nach Gebrauch, bzw. bei Serienmontagen in kurzen, regelmäßigen Abständen zu reinigen, um das Einfrieren und damit das Unbrauchbarwerden der Geräte zu verhindern.

Aus der DE-OS 27 30 110 ist ein Behälter für den Einmalgebrauch bekannt. Allerdings ist dieser Behälter in der Herstellung noch sehr kostenaufwendig. Auch die Handhabung bereitet Schwierigkeiten, da zum Eindrücken des Kolbens ein stabförmiges Hilfsmittel erforderlich ist. Die DE-OS 33 41 283 offenbart einen Behälter für den Einmalgebrauch, mit dem ohne

...

0209673

EP 1507

zusätzliche Hilfsmittel ein Ausspritzen des im Behälter angerührten Bindemittels möglich ist. Allerdings enthält der Behälter nur eine Komponente, während die andere Komponente - bei einer Zementmischung ist dies Wasser - herbeigeholt und mit dem becherartig ausgebildeten Kolben zugefüllt werden muß.

Der Erfindung liegt die Aufgabe zugrunde, die Vorrichtung mit allen Komponenten des Bindemittels auszustatten.

Erfindungsgemäß wird dies dadurch erreicht, daß um die Spritzdüse eine vom Boden des Kolbens ausgehende, mit einer weiteren Komponente gefüllte Hülse angeordnet ist, deren offene Stirnseite mit einem eine aufbrechbare Öffnung aufweisenden Deckel verschlossen ist.

Das beispielsweise aus einem imprägnierten Karton oder Blech bestehende zylinderförmige Behältergehäuse enthält mindestens die Menge der einen Komponente des Bindemittels, die für eine Montage erforderlich ist. Die andere Komponente - bei einer Zementmischung Wasser - befindet sich in der um die Spritzdüse angeordneten Hülse, die mit einem Deckel verschlossen ist. Nach dem Aufbrechen der Öffnung im Deckel wird das Wasser in das geöffnete Behältergehäuse eingeleert und beide Komponenten durch Verrühren miteinander vermischt. Nach dem Anrühren der Mischung wird der mit der Spritzdüse versehene Kolben auf die Öffnung aufgesetzt und die Düse an die Einspritzöffnung am Befestigungselement angesetzt. Durch Druck auf den Boden des Behältergehäuses dringt der Kolben in den Behälter ein und drückt dabei die Mischung durch die Spritzdüse in das Bohrloch.

In einer weiteren Ausgestaltung der Erfindung kann das Füllvolumen der Hülse auf die Füllmenge der im Behältergehäuse eingefüllten Komponente entsprechend dem Mischungsverhältnis abgestimmt sein. Damit liegt stets das richtige Mischungsverhältnis vor, so daß die optimalen Eigenschaften des Bindemittels erreicht sind. Dies erleichtert auch für einen Ungeübten die Durchführung des Verankerungsverfahrens.

- 4 -                                    0209673

EP 1507

Schließlich kann der Verschluß der Öffnung im Deckel durch eine Spritzhaut gebildet sein. Die Spritzhaut ist mit einem Schraubendreher, Nagel oder dgl. leicht durchstoßbar.

In der Zeichnung ist ein Ausführungsbeispiel der Erfindung dargestellt.

Es zeigen:

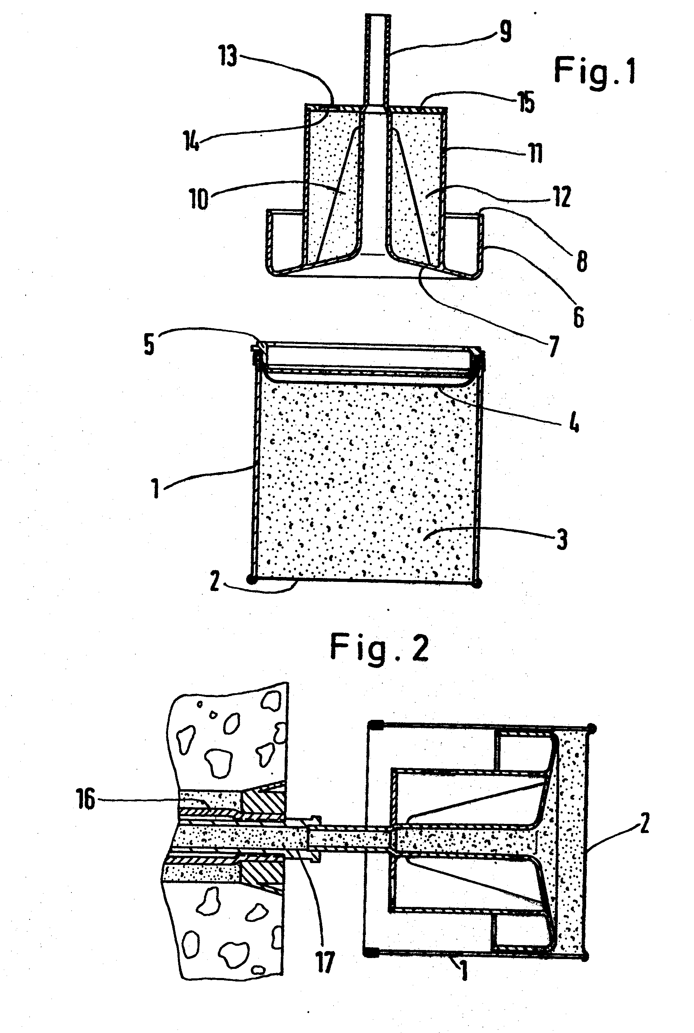

Figur 1    das mit den Komponenten gefüllte Behältergehäuse und den Kolben

Figur 2    das in einer Bohrung im Mauerwerk eingesetzte Befestigungselement nach dem Ausspritzen

Das aus einem imprägnierten Karton oder Blech bestehende Behältergehäuse 1 ist als napfförmiger Hohlzylinder mit Boden 2 ausgebildet. Nach dem Einfüllen der einen Komponente 3 in das Behältergehäuse 1 wird dieses durch eine Reißfolie 4 und/oder gegebenenfalls durch einen Kunststoffdeckel 5 verschlossen. Bestandteil der Vorrichtung ist ferner ein Kolben 6, dessen Boden 7 die über den Rand 8 des Kolbens 6 hinausragende Spritzdüse 9 aufweist. Zur Stabilisierung der einstückig mit dem Kolben 6 im Spritzgußverfahren hergestellten Spritzdüse 9 sind mit dem Boden 7 des Kolbens 6 verbundene Rippen 10 vorgesehen. Um die Spritzdüse 9 ist eine vom Boden 7 des Kolbens 6 ausgehende Hülse 11 angeordnet, in der eine weitere Komponente, 12, in der Regel Wasser, eingefüllt ist. Das Füllvolumen der Hülse 11 ist auf die Füllmenge der im Behältergehäuse 1 enthaltenen Komponente 3 entsprechend dem optimalen Mischungsverhältnis abgestimmt.

Zur Durchführung des Verankerungsverfahrens wird die durch eine Spritzhaut 13 verschlossene Öffnung 14 in dem auf die Stirnseite der Hülse 11 aufgesetzten und verschweißten Deckel 15 beispielsweise mit einem spitzen Gegenstand durchstoßen und das Wasser in das geöffnete Behältergehäuse 1 eingeleert. Nach dem Vermischen durch Rühren, Schütteln oder dgl. wird der Kolben 6 auf die Öffnung des Behältergehäuses 1 aufgesetzt und die

...

EP 1507

Spritzdüse 9 an die Einfüllöffnung des Befestigungselementes 16 angesetzt. Durch Druck auf den Boden 2 des Behältergehäuses 1 wird nunmehr
die Zementmischung durch die Spritzdüse 9 und der im Befestigungselement
eingesetzten Hülse 17 in das Bohrloch eingespritzt. Beim Spritzvorgang
wird das Behältergehäuse 1 in Richtung Mauerwerkoberfläche bewegt, während der Kolben 6 mit Spritzdüse 9 sich am Befestigungselement 16 abstützt.

fischerwerke

Artur Fischer GmbH & Co. KG

7244 Tumlingen / Waldachtal 3                    05. Juli 1985
                                                 Ju/TM

- 1 -

EP 1507

P A T E N T A N S P R U C H E

1. Vorrichtung zum Ausspritzen eines Bindemittels für die Verankerung eines Befestigungselementes in einem Bohrloch, bestehend aus dem eine Komponente des Bindemittels enthaltenden und verschließbaren Behältergehäuse, einer Spritzdüse und einem im Behältergehäuse verschiebbaren Kolben, wobei die Spritzdüse am Kolben angeordnet ist und die Gesamtlänge von Kolben und Spritzdüse mindestens der Innenraumhöhe des Behältergehäuses entspricht, dadurch gekennzeichnet, daß um die Spritzdüse eine vom Boden des Kolbens ausgehende, mit einer weiteren Komponente gefüllte Hülse angeordnet ist, deren offene Stirnseite mit einem eine aufbrechbare Öffnung aufweisenden Deckel verschlossen ist.

2. Vorrichtung nach Anspruch 1, dadurch gekennzeichnet, daß das Füllvolumen der Hülse auf die Füllmenge der im Behältergehäuse eingefüllten Komponente entsprechend dem Mischungsverhältnis abgestimmt ist.

3. Vorrichtung nach Anspruch 1, dadurch gekennzeichnet, daß der Verschluß der Öffnung im Deckel durch eine Spritzhaut gebildet ist.

...

1/1

0209673

Fig.1

Fig. 2

Europäisches Patentamt

**EUROPÄISCHER RECHERCHENBERICHT**

0209673

Nummer der Anmeldung

EP 86 10 7081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP-A-0 144 584 (FISCHER) * Insgesamt * & DE-A-33 41 283 (Kat. D,X) | 1-3 | B 65 D 81/32 B 65 D 83/00 B 05 C 21/00 B 05 C 7/02 // F 16 B 13/14 |
| A | GB-A-2 035 252 (FILLERS) * Seite 1, Zeilen 1-65; Seite 2, Zeile 81 - Seite 3, Zeile 10; Figuren 1-3 * | 1-3 | |
| D,A | DE-A-2 730 110 (FISCHER) | | |

|  |  |
|---|---|
| | RECHERCHIERTE SACHGEBIETE (Int Cl 4) |
| | B 65 D E 21 D F 16 B |

Der vorliegende Recherchenbericht wurde für alle Patentansprüche erstellt.

| Recherchenort | Abschlußdatum der Recherche | Prüfer |
|---|---|---|
| DEN HAAG | 22-10-1986 | VAN DER WAL W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82